# EUROPEAN PATENT APPLICATION

(11) **EP 3 978 427 A1**
(43) Date of publication of application: **06.04.2022**
(21) Application number: 20199771.5
(22) Date of filing: 02.10.2020
(51) Int. Cl.: C01B 3/24, C10L 3/08, F17D 1/04, H05B 7/00, C01B 32/05, H01J 37/32, H05H 1/48, C10L 3/10

(54) **DECARBONIZATION AND TRANSPORT OF A C1- TO C4-ALKANE-CONTAINING GAS**

(71) Applicant: Uniper Hydrogen GmbH, 40221 Düsseldorf (DE)
(72) Inventor: Markowz, Georg, 63755 Alzenau (DE)
(74) Representative: Ter Meer Steinmeister & Partner

(57) **Abstract**

The present invention relates to a method for decarbonizing a C₁- to C₄-alkane-containing gas stream at least partially and transporting it to a desired destination, wherein the method comprises taking a portion from a C₁- to C₄-alkane-containing gas stream which flows through a pipeline of a transmission grid at a branching point; decarbonizing said portion by converting it into a mixture comprising hydrogen and solid carbon by use of electric energy and separating the solid carbon in order to obtain a gas comprising hydrogen; feeding at least a portion of the gas comprising hydrogen into a pipeline of a grid at a feed point in order to obtain an at least partially decarbonized gas stream; and transporting the at least partially decarbonized gas stream to a desired destination. Furthermore, the present invention relates to a facility by means of which the inventive method can be carried out.

## Description

The present invention relates to a method for decarbonizing a C₁- to C₄-alkane-containing gas stream at least partially and transporting it to a desired destination, wherein the method comprises taking a portion from a C₁- to C₄-alkane-containing gas stream which flows through a pipeline of a transmission grid at a branching point; decarbonizing said portion by converting it into a mixture comprising hydrogen and solid carbon by use of electric energy and separating the solid carbon in order to obtain a gas comprising hydrogen; feeding at least a portion of the gas comprising hydrogen into a pipeline of a grid at a feed point in order to obtain an at least partially decarbonized gas stream; and transporting the at least partially decarbonized gas stream to a desired destination. Furthermore, the present invention relates to a facility by means of which the inventive method can be carried out.

Power generation from natural gas is still a widely applied energy generation concept. This may, for instance, be evidenced by the data of the ISE-Fraunhofer institute which may be retrieved from the website with the following URL https://www.energy-charts.de/energy_de.htm?source=all-sources&period=annual&year=2019. According to these data, natural gas had a share of 10.31 % on the total power production in Germany in 2019. Yet, the demand for natural gas is also high because it is a critical component in various other applications: The industrial sector, for example, uses natural gas as a fuel for process heating, in combined heat and power systems, and as a raw material to produce chemicals. The residential sector mainly uses natural gas to heat buildings and water. As an energy source, natural gas is a convenient due to several reasons: Firstly, gas turbine power plants, combined cycle power plants or gas engine power plants which operate on natural gas may be operated more flexibly than nuclear power plants and coal-fired power plants. Secondly, the production of power from natural gas does not require as many safety precautions as nuclear power production. Thirdly, the amount of carbon dioxide which is released upon combustion of natural gas is small compared to the combustion of several other fossil fuels.

However, even if power generation from natural gas scores better than other power generation technologies in terms of its carbon footprint, it can, bay far, not be considered sustainable. The combustion of any light-weight hydrocarbon gas, including natural gas, results in the emission of carbon dioxide. Especially in the long-term, all carbon dioxide emissions from fossil sources to the atmosphere should be limited as far as possible since they further contribute to the greenhouse effect that we are experiencing already nowadays. Hence, many politicians and environmental activists demand a very low or zero emission power generation, a sustainable heat generation for buildings and water and an environmentally responsible production of chemicals.

One approach to reduce the amount of emitted carbon dioxide to acceptable levels is based on a post-combustion intervention downstream of the power plants. This approach includes capturing the carbon dioxide emissions and subjecting them to a compression and sequestration. Yet, this approach is not very appealing since it requires the construction of huge absorption towers, compressors and other units. Moreover, the transport of the captured and pressurized carbon dioxide to the CO₂-storage sites may be costly, especially when the power plant is far away from such sites. Also, capacities for such CO₂-storage sites may be limited. Lastly, there is public concern about reliability of operation of such CO₂-storage sites.

Another approach to improve the net carbon dioxide emissions is based on a pre-combustion intervention. The steps of decarbonizing the natural gas and sequestering the carbon dioxide are performed upstream of and in close proximity to the power plants. This approach is also associated with the above-mentioned disadvantages of an effortful transport of carbon dioxide to appropriate CO₂ storage sites and operation and risks of such sites. Besides, it is not attractive for existing power plants, since such a decarbonization facility, would have to be set up next to the power plant in a limited space within an industrial park. Apart from the unfavorable space conditions, the provision of a decarbonization facility for each power plant is costly from an investment point of view, since the facility may not be operated to an adequate capacity level.

In view of the above, the objective underlying the present invention is the provision of a method and a facility which assist with overcoming the deficiencies of the outlined approaches and which allow reducing the carbon footprint associated with the power production from natural gas or the use of natural gas in other applications.

This objective is achieved by the provision of a method and a facility according to the independent claims.

The method for decarbonizing a C₁- to C₄-alkane-containing gas stream at least partially and transporting it to a desired destination according to the present invention comprises at least the steps of taking a portion from a C₁- to C₄-alkane-containing gas stream which flows through a pipeline of a transmission grid at a branching point (step a); decarbonizing said portion (step b) by converting it into a mixture comprising hydrogen and solid carbon by use of electric energy (step b1) and by separating the solid carbon in order to obtain a gas comprising hydrogen (step b2); feeding at least a portion of the gas comprising hydrogen into a pipeline of a grid at a feed point upstream or downstream of the branching point thereby obtaining an at least partially decarbonized gas stream (step c); and transporting the at least partially decarbonized gas stream to a desired destination (step d).

In this context, the "C₁- to C₄-alkane-containing gas stream" is a gas stream which mainly comprises methane, ethane, propane, butane, 2-methyl-propane, or mixtures thereof. The sum of the C₁- to C₄-alkane(s) in the gas stream is at least 10 vol. %, preferably at least 25 vol. %, more preferably at least 50 vol. %, more preferred at least 75 vol. %, even more preferred at least 90 vol. %. In a preferred embodiment, the C₁- to C₄-alkane-containing gas stream is natural gas.

In another preferred embodiment, the C₁- to C₄-alkane-containing gas stream contains methane and/or propane. This is advantageous as both gases can be obtained in large quantities, e.g. methane from natural gas and propane from the production of hydrogenated vegetable oils. Most preferably, the C₁- to C₄- alkane-containing gas stream contains methane, in particular at least 25 vol. % methane, more preferably at least 50 vol. % methane, even more preferably at least 75 vol. % methane, most preferably at least 90 vol. % methane.

In certain embodiments, the C₁- to C₄-alkane-containing gas stream comprises less than 5 vol. % O₂, preferably less than 2 vol. % O₂, most preferably less than 1 vol. % O₂, less than 10 vol. % CO, preferably less than 5 vol. % CO, most preferably less than 2.5 vol. % CO, less than 10 vol. % CO₂, preferably less than 5 vol. % CO₂, most preferably less than 2.5 vol. % CO₂, and/or less than 10 vol. % N₂, preferably less than 5 vol. % N₂, most preferably less than 1 vol. % N₂. Most preferably, however, the C₁ to C₄-alkane containing gas stream is essentially free of O₂, CO, CO₂ and N₂.

In certain embodiments of the present invention, the C₁- to C₄-alkane-containing gas stream comprises from 0.1 up to 25 vol. % H₂, preferably from 0.5 up to 15 vol. %, more preferably from 1 up to 5 vol. %. The C₁- to C₄- alkane-containing gas may also comprise from 0.01 up to 1 vol. % acetylene, preferably from 0.02 up to 0.5 vol. %, more preferably from 0.05 up to 0.2 vol. %. Most preferably, however, the C₁ to C₄-alkane containing gas is essentially free of H₂ and acetylene.

Furthermore, the "transmission grid" is a network of gas pipelines by which the C₁- to C₄ alkane containing gas stream is carried away from a natural reservoir of the C₁- to C₄ alkane containing gas or a production site for the C₁- to C₄ alkane containing gas.The tranmission grid preferably serves to deliver the C₁- to C₄ alkane containing gas stream over long distances, for example to places that are several hundred or several thousand of kilometers away from the natural reservoir or production site. In order to facilitate the transport, the pipelines of the transmission grid preferably have diameters of 800 to 1500 mm.

The C₁- to C₄ alkane containing gas stream is preferably transported through the pipelines of the transport grid at an elevated pressure, preferably at a pressure from 10 to 150 bar. The pipelines of the transport grid are thus preferably designed for gas pressures up to 150 bar.

Another "grid" besides the transport grid is, for example, a distribution grid. The pipelines of a distribution grid connect the transport grid to an end consumer and usually transport the C₁- to C₄ alkane containing gas only over medium and short distances, for example distances of less than hundred kilometers. In a preferred embodiment, distribution grids comprise metering and regulating stations and reduced-pressure pipelines. The metering and regulating stations are used for reducing the pressure of the C₁- to C₄-alkane containing gas stream to low pressures of, for example, less than 10 bar. In a further preferred embodiment, the distribution grids comprise supply stations which reduce the pressure of the C₁- to C₄-alkane containing gas stream to a pressure from 20 to 150 mbar.

The method according to the current invention allows to convert at least a portion of the C₁- to C₄-alkane containing gas in the C₁- to C₄-alkane containing gas stream into a "cleaner" gas, such as hydrogen. The method is thus appropriate to dramatically reduce the carbon emissions which result from the power generation from natural gas or from other natural gas applications.

Generally speaking, the inventive method is also based on a pre-combustion intervention approach. However, a first central difference is that carbon will be extracted in the form of solid carbon instead of carbon dioxide from the gas avoiding the above-mentioned disadvantages of sequestering carbon dioxide. Second, by shifting the decarbonization procedure further upstream of the power plants or the facilities for other uses of natural gas, the disadvantages, which arise from a pre-combustion intervention that is carried out directly upstream of a power plant, are eliminated. On the one hand, the inventive method may be carried out in a centralized fashion which leads to better economy of scale of the corresponding decarbonization facility. On the other hand, the centralized handling which is inherent to the inventive method provides more freedom regarding the selection of suitable locations (locations which may be supplied with high shares of power from renewable sources or which also have an otherwise appropriate infrastructure, e.g. storage site for solid carbon).

In cases in which the feed point is located upstream of the branching point (step c), the method will result in unsteady operation states in ramp-up phases. The operation will converge to a steady state within a maximum of several hours. However, the unsteady states may provide difficulties in the control of the method. Also, the gas which is taken from the grid to feed the facility to decarbonize the gas typically contains higher amounts of hydrogen when the hydrogen containing gas is fed into the pipeline upstream of the point of the branch resulting in a less efficient operation of the facility to decarbonize the gas. Thus, feeding the gas comprising hydrogen into the pipeline downstream of the branching point is a more preferred embodiment of the inventive method.

This means, it is preferred, if the method according to the present invention includes feeding at least a portion of the gas comprising hydrogen into a pipeline of a grid at a feed point downstream of the branching point (step c). If the feed point is located downstream of the branching point, unsteady states in ramp-up or shut down phases may be avoided and the method may be controlled in a more straightforward and a more efficient way.

In one embodiment, the inventive method may further comprise a step of maximizing an absolute amount of hydrogen contained in the gas comprising hydrogen, wherein said step is preferably controlled based on a flow rate of the C₁- to C₄-alkane-containing gas stream and at least one physical constraint. Preferably, said step is controlled based on a flow rate of the C₁- to C₄-alkane-containing gas stream at a point upstream of and adjacent to the branching point and at least one further physical parameter of the C₁- to C₄-alkane-containing gas stream measured at the branching point or at a point adjacent to the branching point.

Ultimately, the abovementioned embodiment of the invention allows to suitably adapt the composition of the at least partially decarbonized gas stream to the needs of the end consumers and/or to legal requirements. The physical constraint in this embodiment is preferably linked to the composition and/or the hydrogen concentration of the C₁- to C₄-alkane-containing gas stream after mixing the hydrogen containing gas with the remainder of the C₁- to C₄-alkane-containing gas, i.e. the gas which has not been taken from the transmission pipeline at the branch. Moreover, the at least one physical parameter may, for example, be the lower heating value, the density or the Wobbe-index of the C₁- to C₄-alkane-containing gas stream and/or combinations thereof.

In another embodiment, the inventive method further comprises a step of supplying a portion of the gas comprising hydrogen to an end consumer via a supply line. Alternatively or in addition to that, the inventive method may comprise a step of synthesizing a second C₁-to C₄-alkane-containing gas from a portion of the gas comprising hydrogen by reacting said portion with carbon dioxide and/or carbon monoxide in a device for the production of a second C₁- to C₄ alkane-containing gas from hydrogen and carbon dioxide and/or carbon monoxide. The carbon dioxide and/or carbon monoxide that is reacted with hydrogen in the device for the production of a second C₁- to C₄ alkane-containing gas is preferably obtained by means of separation from an off-gas of an industrial process. This off-gas may have been generated by operation of a power plant unit, by production of the C₁- to C₄-alkane-containing gas, and/or by operation of a biogas plant. Alternatively, the carbon dioxide and/or carbon monoxide containing gas may have been generated by reforming of a hydrocarbon containing gas, preferably by reforming of biogas. More preferably, the carbon dioxide is captured from the flue gas of a gas-fired power plant which is operated to provide electricity for the facility to produce hydrogen and carbon from C₁- to C₄-alkane-containing gas and/or for compressors used to compress the C₁- to C₄-alkane-containing gas flowing in the transmission or distribution pipeline. Another option is to use a carbon dioxide which is obtained by means of a Direct Air Capture process.

The additional step of supplying a portion of the gas comprising hydrogen to an end consumer and the additional step of synthesizing a second C₁- to C₄-alkane-containing gas from a portion of the gas comprising hydrogen are advantageous, if the produced gas comprising hydrogen can not be fed back into a pipeline of a grid (step c) since it would, in this moment, violate legal regulations or would not be compatible with the specifications demanded by the end consumer of the at least partially decarbonized gas stream which is obtained in step d. Moreover, the additional step of synthesizing a C₁- to C₄-alkane-containing gas from a portion of the gas comprising hydrogen is useful since it can serve as a CO₂-sink and can effectively reduce the carbon dioxide emissions of other processes.

It is further preferred, if a gas with a defined composition is obtained in the additional step of synthesizing a second C₁- to C₄-alkane-containing gas. Preferably, the second C₁- to C₄-alkane-containing gas is methane or a gas essentially consisting of methane. It is even more preferred, if the second C₁- to C₄-alkane-containing gas contains ethane, propane and/or butane since they have higher specific (volumetric) heating values and Wobbe indices and may enable to feed back more hydrogen into the pipeline compared to the case where just methane is the main component of the second C₁- to C₄-alkane-containing gas.

Alternative to the step of synthesizing a second C₁- to C₄-alkane-containing gas, a third C₁-to C₄-alkane-containing gas preferably containing ethane, propane and/or butane may be provided separately and mixed with the gas comprising hydrogen prior to feeding it into a pipeline of a grid at a feed point in order to adjust the physical properties of the gas comprising hydrogen and enabling higher amounts of hydrogen to be fed into a pipeline of a grid at a feed point.

In order to convert the portion taken from the C₁- to C₄-alkane-containing gas stream into a mixture comprising hydrogen and solid carbon, a plasma reactor may be used.

The "plasma reactor" is a reactor which accommodates a plasma.

The term "plasma" denotes a gas which comprises ions and free electrons. Moreover, the plasma in the plasma reactor is artificially generated by the use of electrical energy, for example by subjecting a gas to a strong electromagnetic field.

The plasma reactor preferably is a high-temperature reactor which accommodates gases having local temperatures up to at least 1400 °C, preferably up to at least 2000 °C, more preferably up to at least 2800 °C. Preferably, the plasma reactor is a plasma reactor which converts the portion taken from the C₁- to C₄-alkane-containing gas stream into a mixture comprising hydrogen and solid carbon in a high yield and, simultaneously, produces only very small amounts of acetylene, benzene or other unsaturated hydrocarbon compounds. This significantly reduces the tendency of tar formation in the plasma reactor or equipment downstream of the reactor and, thus, also avoids undesired interruption of operation in order to remove corresponding depositions on reactor walls or other equipment in the whole facility. Furthermore, there is less need to remove physically or to convert - e.g., by hydrogenation - such undesired side products before being fed into a pipeline of the grid and/or being sent to an end consumer.

In one embodiment, the electric energy that is used for converting the portion taken from the C₁- to C₄-alkane-containing gas stream into a mixture comprising hydrogen and solid carbon is retrieved from an external, electrical grid. In a preferred embodiment of the invention, however, the electric energy that is used for converting the portion taken from the C₁- to C₄-alkane-containing gas stream into a mixture comprising hydrogen and solid carbon is produced by a power plant unit. The power plant unit is preferably set up in close proximity to the plasma reactor.

Moreover, in a first preferred embodiment, the power plant unit has a carbon footprint from 0 to 600 g_{CO2}/kWh_{used}, more preferably from 0 to 500 g_{CO2}/kWh_{used}, even more preferably from 0 to 400 g_{CO2}/kWh_{used}, most preferably from 0 to 350 g_{CO2}/kWh_{used}.

In this context, the "carbon footprint" of a power plant denotes the amount of CO₂ emitted to the atmosphere by the power plant itself (i.e. only via the emission of flue gas) upon combustion of fossil fuels (e.g., natural gas, fossil heating oil, hard coal or lignite including derived fuels and wastes) per respective amount of energy produced by the power plant.

The unit "kWh_{used}" must be seen in the context of power plants which not only provide electricity but also heat for technical applications, such as industrial process heat or district heating. In this context, the unit "kWh_{used}" denotes the amount of energy which is technically used either as heat or as electrical energy. Heat which is lost to the environment or which is absorbed by a cooling fluid without any specific technical benefit does not fall under this amount of energy and does, thus, not contribute to the "kWh_{used}".

A power plant unit having a carbon footprint of 0 g_{CO2}/kWh_{used} is, thus, a power plant which is operated with zero CO₂ emission to the atmosphere. Examples for such zero emission power plants are wind and PV power plants, alternatively nuclear power plants or power plants with capture of all CO₂ from the flue gas and its sequestration before release of the remainder of the flue gas to the atmosphere.

According to a second, but less preferred embodiment, the power plant unit has a carbon footprint from 1 to 500 g_{CO2}/kWh_{used}, more preferably from 2 to 450 g_{CO2}/kWh_{used}, even more preferably from 5 to 400 g_{CO2}/kWh_{used}, most preferably from 5 to 350 g_{CO2}/kWh_{used}. These non-zero lower limits for the carbon footprint apply to power plants that need to be fueled with a small share of non-renewable energy sources for some reason or with fuels with small carbon footprint such as some renewable fuels.

Further, it is inherent to the above-defined carbon footprints that they are average carbon footprints and vary over time. The variations are due to different factors. For example, the amount of heat (such as for heat for district heating) being co-produced and technically used along with electricity may change over time. Also, the efficiency of a power plant may change dependent on its load or in ramp-up or shut down phases. For example, gas-fired power plants may have higher efficiencies at higher loads. Therefore, the carbon footprint shall always refer to the period of time where the power plant provides the power to the plasma plant.

In one embodiment of the invention, the portion of the gas stream comprising hydrogen which is fed into a pipeline of a grid at the feed point (step c) contains unsaturated hydrocarbons in a concentration of less than 2 vol.-%, preferably less than 1 vol.-%, even more preferably less than 0.1 vol.-%, wherein said concentration is preferably achieved by hydrating at least a portion of unsaturated hydrocarbons that are comprised by the gas comprising hydrogen prior to step c) in a hydration device.

As has already been indicated above, "unsaturated hydrocarbons", such as acetylene, are undesirable by-products of the conversion process (step b1). These by-products especially may occur, if a plasma reactor is used to convert the portion taken from the C₁- to C₄-alkane-containing gas stream into a mixture comprising hydrogen and solid carbon.

In another preferred embodiment of the inventive method, the solid carbon is sequestered and/or further processed after it has been separated from the hydrogen in the mixture comprising hydrogen and solid carbon (step b2). Of these two options, a further processing of the solid carbon by supplying at least a fraction of the solid carbon to a chemical or physical process is the more preferred option.

The pipeline of the grid into which at least a portion of the gas comprising hydrogen is fed (step c) may either be the pipeline of the transmission grid from which the C₁- to C₄-alkane containing gas has initially been branched (in step a) or another pipeline of the same transmission grid. Alternatively, the pipeline of the grid into which at least a portion of the gas comprising hydrogen is fed (step c) may be a pipeline belonging to a distribution grid. In another aspect, the current invention relates to a facility for at least partially decarbonizing a C₁- to C₄-alkane-containing gas stream being transported through a pipeline of a transmission grid, comprising a device for the production of hydrogen and solid carbon from a C₁- to C₄ alkane-containing gas by use of electric energy, wherein the device comprises at least one device for separating solid carbon from hydrogen, wherein the device further comprises an inlet and an outlet, and wherein the inlet is connected to a pipeline of the transmission grid for a C₁- to C₄-alkane-containing gas stream at a branching point and the outlet is connected to a pipeline of a grid at a feed point downstream or upstream of the branching point.

This facility allows to put the inventive method into practice. Thereby it also contributes to a reduction in the carbon footprint which is associated with power or other energy production from natural gas.

The device for the production of hydrogen and solid carbon does preferably not correspond to a conventional reformer such as a steam reformer for natural gas. Instead, it is preferred that the device for the production of hydrogen and solid carbon from a C₁- to C₄-alkane-containing gas operates utmost in the absence of oxygen (such as from steam in a steam reformer) and by use of a thermal plasma as source of energy (instead of burning a fuel). Electric energy may be used to create a thermal plasma and to split the C₁- to C₄-alkane-containing gas in order to obtain high yields of hydrogen and solid carbon.

In terms of specific electrical energy demand per unit of hydrogen produced, i.e. Megawatthours of electrical energy (MWhₑₗ) which are consumed for the production of 1 MWh of lower heating value of hydrogen (MWh_{H2}), the device for the production of hydrogen and solid carbon - which uses the C₁- to C₄-alkane-containing gas as a feedstock - is significantly superior over conventional electrolysis cells, i.e. it requires a much lower specific electrical energy demand.

From a physical standpoint, this can be explained by the amount of binding energy of hydrogen-carbon bonds in the alkane-containing gas. This binding energy is low compared to the binding energy of hydrogen-oxygen bonds in water. Due to that, also the required splitting energy is favorably low for said alkane containing gas. Accordingly, the splitting of an alkane-containing gas into hydrogen and carbon allows for hydrogen production with less specific electrical energy input than the splitting of water in an electrolysis cell.

More specifically, conventional electrolysis cells have a specific electrical energy demand of 1.3-1.5 MWhₑₗ/MWh_{H2}, the device for the production of hydrogen and solid carbon requires about 0.6 MWhₑₗ/MWh_{H2} or less. Moreover, the prospects are promising in so far as that the specific electrical energy demand of the device for the production of hydrogen and solid carbon may be further lowered to less than 0.5 MWhₑₗ/MWh_{H2} or even less than 0.4 MWhₑₗ/MWh_{H2}.

Preferably, the device for the production of hydrogen and solid carbon from a C₁- to C₄-alkane-containing gas by use of electric energy further comprises a plasma reactor and/or a device for enrichment of hydrogen. In the case in which the device for the production of hydrogen and solid carbon from a C₁- to C₄-alkane-containing gas by use of electric energy comprises a plasma reactor, the plasma reactor preferably comprises a thermal plasma generator.

The plasma section of the plasma reactor preferably includes the thermal plasma generator. The thermal plasma generator may comprise a cathode and an anode which are configured to generate an electric arc within the plasma section, when powered. The electric arc heats C₁- to C₄-alkane-containing gas to form a plasma gas in said plasma section. Amongst others, this involves the formation of ions and radicals. The plasma gas is thus rich of ionized atoms and/or molecules and/or of radicals derived from the C₁- to C₄-alkane-containing gas.

Devices for the enrichment of hydrogen, i.e. for the separation of hydrogen from other gases and hydrocarbons such as methane, CO and N₂, are known from prior art. In a preferred embodiment the device for the enrichment of hydrogen is a pressure swing adsorption (PSA) unit. A PSA process is a cyclic process involving the adsorption of impurities, such as CO, CO₂, CH₄ and N₂, from a hydrogen-rich gas stream at an elevated pressure on a solid adsorbent such as a molecular sieve. The operation is carried out at room temperature and preferably at elevated pressure. Several adsorption vessels (adsorbers) are employed so that the process can be driven continuously and one of the adsorbents can be recovered, while the other is being used.

The plasma reactor preferably comprises a plasma section comprising an anode and a cathode for generating an electric arc, the arc extending within the plasma section, and at least one first feed line for introducing a C₁- to C₄-alkane-containing plasma gas into the plasma section of the reactor, wherein the anode has a hollow channel along the flow direction of the main stream of the plasma gas which has an inner surface, an outlet in the flow direction of the main stream of the plasma gas which forms the open end of the anode in the flow direction of the main stream, and at least one inlet for receiving the C₁- to C₄-alkane-containing plasma gas introduced into the plasma section of the reactor via the at least one first feed line wherein the inlet forms the open end of the anode facing into the direction opposite to the flow direction of the main stream, and wherein the anode is configured such that the plasma gas flows through the hollow channel via the open end of the anode facing into the direction opposite to the flow direction of the main stream and the open end of the anode in the flow direction of the main stream, wherein the plasma gas contacts the inner surface of the hollow channel of the anode on its passage through the anode, and wherein said anode and said cathode are arranged so that the arc generated by them is formed in said plasma section to form a plasmaeous plasma gas in said plasma section from the C₁- to C₄-alkane-containing plasma gas introduced into said plasma section through said at least one first feed line, and wherein the foot points of the electric arc contacting the anode are located on the inner surface of the hollow channel of the anode, and a second reactor section directly downstream of the plasma section of the reactor in the flow direction of the main stream, the second reactor section comprising a first subsection and a second subsection, wherein the second subsection is directly downstream of the first subsection in the flow direction of the main stream, and outlet means for withdrawing components from the reactor, wherein the outlet means are located at the end of the second reactor section in the flow direction of the main stream, wherein the first subsection comprises at least one second feed line for introducing a C₁- to C₄-alkane-containing gas into the second reactor section, wherein the at least one second feed line is arranged such that the C1-to C4-alkane-containing gas which is introduced into the reactor via the at least one second feed line is introduced into the plasmaeous gas at a position downstream of the foot points of the electric arc in the flow direction of the main stream, so that in the first subsection of the second reactor section downstream of the at least one second feed line a mixture is formed from the plasmaeous plasma gas leaving the plasma section and the C1- to C4-alkane-containing gas of the at least one second feed line, and wherein the position of the at least one second feed line along the flow direction of the main stream defines the beginning of the second reactor section and of its first subsection, and wherein the volume of the plasma section which begins at the most upstream position at which the inner surface of the hollow channel of the anode is facing the electric arc and reaches down to the end of the plasma section of the reactor has a volume in the range of 0.0001 m³ to 0.4m³, preferably in the range of 0.001 to 0.2 m³, and defines a reference volume, and wherein the volume of the first subsection of the second reactor section is in the range of 10 to 200 times the reference volume, preferably in the range of 20 to 100 times the reference volume, and wherein the volume of the total second reactor section is in the range of 20 to 2,000 times the reference volume, preferably in the range of 40 to 1,000 times the reference volume, and wherein the reactor comprises in the first subsection of the second reactor section and/or in the plasma section in the range downstream in the flow direction of the main stream of the foot points of the electric arc on the inner sur-face of the hollow channel of the anode down to the end of the plasma section at least at one point a flow cross-section transverse to the flow direction of the main stream which is greater by at least a factor of 5, preferably by at least a factor of 10, in comparison with the average flow cross-section of the anode transverse to the flow direction of the main stream in the range of the foot points of the electric arc on the inner surface of the hollow channel of the anode.

In this context and in embodiments of the invention, the term "plasmaeous plasma gas" refers to a gas which is present in a plasma state. A gas which is merely intended to be introduced and/or treated in a reactor for generating a thermal plasma by means of an electric arc, but which is not or not yet present in a plasma state does not fall under the definition of a plasmaeous plasma gas. A gas which exits a reactor for generating a thermal plasma by means of an electric arc and is not or no longer present in a plasma state does, likewise, not fall under the definition of a plasmaeous plasma gas.

According to A. Fridman (Plasma Chemistry, Cambridge University Press, 2009), a gas which is present in a plasma state is generally defined as an ionized gas, i.e. a gas containing at least one electron which is not bound to an atom or molecule, converting the atoms or molecules into positively charged ions. Preferably, a gas which is present in a plasma state contains electrically charged particles in an amount which is sufficient to affect and change its electrical properties and behavior relative to the normal gas state. An example of an electrical property is the electrical conductivity. The electrical conductivity is increased in the plasma state of a gas, especially in the plasma state which is adopted at elevated temperatures. Conceptually, the correlation of the electrical conductivity with the plasma state and the temperature of a gas may be explained as follows: It is known that the degree of ionization increases with temperature (for example shown by tabulated data for hydrogen, nitrogen, oxygen, air and selected noble gases in M. I. Boulos, Thermal Plasmas, Fundamentals and Applications, Vol. 1, 1994). Due to the enhanced mobility of opposite charges, an increased degree of ionization then also comes along with an increased electrical conductivity.

Moreover, a plasmaeous plasma gas in the sense of the current invention is preferably characterized by the fact that the electrical conductivity of the respective plasmaeous plasma gas at a given density is at least 1 order of magnitude, preferably 2 orders of magnitude, even more preferably 4 orders of magnitude higher than the electrical conductivity of the corresponding gas at room temperature and the same density .

Whereas non-plasma state gases at room temperature (i.e. without external electrical or other excitation) have electrical conductivities below 10-22 S/m, a gas in a plasmaeous state according to the present invention is characterized by an electrical conductivity of at least 10-21 S/m, preferably at least 10-20 S/m, even more preferably at least 10-18 S/m.

In this context, the skilled person can measure the electrical conductivity of a gas by a technique which is analogous to the flame ionization detection method.

A gas which is present in a plasma state is preferably generated by the use of electrical energy, for example by subjecting a gas to a strong electromagnetic field, for example an electromagnetic field which is generated in the surrounding of an electric arc.

A plasmaeous plasma gas, i.e. a gas present in a plasma state, can at least be encountered at one point of a flow cross-section transverse to the flow direction of the main stream in the current reactor.

This plasma reactor design allows for an enhanced control of temperature and concentration profiles, mean residence times, residence time distributions. Furthermore, it ensures that the compounds are homogeneously mixed. The formation of undesired by-products is substantially suppressed.

Preferably, the anode which is comprised by the plasma reactor has a cylindrical shape having a coaxial hollow channel. In preferred embodiments, the anode and/or the cathode are cooled electrodes, wherein the cooling is preferably liquid cooling, more preferably water cooling. This ensures reduced erosion and long-lasting operation of the electrodes. In further embodiments, the anode and/or the cathode are made of materials comprising less than 10 wt. % of graphite or other solid carbon materials. However, graphite or solid carbon-based electrodes typically exhibit higher deterioration rates and require higher investment costs than metal-based electrodes. Accordingly, in preferred embodiments the anode and the cathode of the reactor are metal electrodes.

In further embodiments, the anode and cathode are concentric and also the cathode has a hollow channel with the main axis extending along the flow direction of the main stream, wherein the hollow channel has two opposing ends, wherein the end facing into the direction opposite to the flow direction of the main stream is closed and wherein the end facing into the flow direction of the main stream of the plasma gas is open. Preferably, this open end facing into the flow direction of the main stream of the plasma gas is positioned upstream and concentric to the open end of the anode facing into the direction opposite to the flow direction of the main stream. The term "closed" in the context of the end of the hollow channel of the cathode facing into the direction opposite to the flow direction of the main stream means that the end of the channel is completely closed or that the flow cross-section transverse to the flow direction of the main stream is reduced by at least 90 % based on the area of the flow cross-section in comparison with the average flow cross-section of the cathode transverse to the flow direction of the main stream in the range of the foot points of the electric arc on the inner surface of the hollow channel of the cathode.

In these embodiments, the anode and cathode are arranged such that the foot points of the electric arc contact the inner surface of the cathode and the inner surface of the anode, respectively. In preferred embodiments, the anode and the cathode are arranged such that there is a gap in the direction of the main stream between the end of the cathode facing into the flow direction of the main stream and the end of the anode facing into the direction opposite to the flow direction of the main stream. The length of said gap is preferably at least 0.3, more preferably at least 0.5, times the average inner diameter of the hollow channel of the anode in the range of the foot points of the electric arc on the inner surface of the hollow channel of the anode. In some embodiments, the at least one first feed line is arranged such that the plasma gas is introduced into the plasma section of the reactor via the gap between the anode and cathode.

Shape and location of foot points of electric arcs on the cathode and/or on the anode typically vary over time during operation, not only during ramp-up, shut down and load changes, but also during steady state operation. Especially, in case of anodes having a hollow channel and wherein the foot points of the electric arc are on the inner surface of the hollow channel of the anode, the location of the foot points may vary over time and even in steady state operation both along the perimeter of the anode but also at least to a finite extent upwards and downwards in the flow direction of the main stream. The range of the locations of foot points on the inner surface of the hollow channel of the anode in the flow direction of the main stream typically depends on the current mode of operation. For example, if all other process parameters are kept constant, an increase in electrical load results in an elongation of the electric arc and hence in a shift of the range of locations of foot points on the inner surface of the hollow channel of the anode to an area on the surface of the hollow channel of the anode more downstream in the flow direction of the main stream. In the context of the present invention, with respect to the inner surface of the hollow channel of the anode, the term foot points refers to the location of the foot points which is most downstream under all continuous reactor operation modes. The most extended reach of foot points can for example be identified upon revision of an anode after operation based on an analysis of the material erosion on the inner surface of the hollow channel of the anode. The material erosion is namely higher at the part of the inner surface which is contacted by the foot points compared to surface sections which the arc has not reached during operation. The foot points define an area in which the electric arc contacts the anode. Likewise, the area where foot points are located on the inner surface of a hollow channel of a cathode during operation may be identified upon revision after operation.

The term "anode", as used for the definition of the plasma reactor, is to be understood narrowly: The anode stretches down to the beginning of the second reactor section which is identical to the beginning of the first subsection of the second reactor section, i.e., the position of the at least one second feed line along the flow direction of the main stream, even though parts beyond the beginning of the first subsection of the second reactor section may have the same electrical potential as the anode. Other parts of the plasma section, e.g., a magnetic device or a device for fluid-dynamically inducing swirling of the plasma gas, do not belong to the anode as defined according to the present invention, even though they may have the same electric potential as the anode. Accordingly, in some embodiments the flow cross-section transverse to the flow direction of the main stream of the reactor at the open end of the anode facing into the flow direction of the main stream, or at the position at which the foot points of the electric arc contact the inner surface of the hollow channel of the anode does not change along the length of the anode and/or the transition from the anode to the second reactor section. In other words, the flow cross-section transverse to the flow direction of the main stream may essentially stay the same in the anode and at the transition from the anode to the second reactor section. Hence, in certain embodiments the flow cross-section at the open end of the anode opposite to the flow direction of the main stream transverse to the flow direction of the main stream may essentially be the same as the flow cross-section transverse to the flow direction of the main stream at the beginning of the first subsection of the second reactor section.

In preferred embodiments, the reactor comprises at least one sudden expansion which is positioned between the foot points of the electric arc on the inner surface of the hollow channel of the anode and the most upstream point in the flow direction of the main stream at which the flow cross-section transverse to the flow direction of the main stream is greater by at least a factor of 5, preferably a factor of 10, in comparison with the average flow cross-section of the anode transverse to the flow direction of the main stream in the range of the foot points of the electric arc on the inner surface of the hollow channel of the anode. The sudden expansion is a sudden expansion of the flow cross-section transverse to the flow direction of the main stream which has an opening angle of at least 20 °, preferably at least 45 °, more preferred at least 75 °, into the flow direction of the main stream relative to the main stream axis. This reactor configuration helps to mix the C₁- to C₄-alkane-containing gas which is introduced into the reactor via the at least one second feed line and the plasmaeous plasma gas and to broaden the residence time distribution of the atoms of the mixture. Especially, the sudden expansion improves backmixing of a portion of solid particles rich in carbon whose surfaces have a catalytic impact on decomposition of hydrocarbons and which may grow to a larger size through backmixing. Also, further means like means for the induction of turbulence and/or backmixing may broaden the residence time distribution and further improve the device and the process of the present invention. Hence, in some embodiments the second reactor section comprises at least one additional device for inducing additional turbulence and/or backmixing of the mixture, preferably being positioned downstream of the at least one second feed line in the flow direction of the main stream. In some embodiments, the at least one additional device is positioned downstream of the most upstream point in the flow direction of the main stream at which the flow cross-section transverse to the flow direction of the main stream is greater by at least a factor of 5, preferably by at least a factor of 10, in comparison with the average flow cross-section of the anode transverse to the flow direction of the main stream in the range of the foot points of the electric arc on the inner surface of the hollow channel of the anode. In these embodiments, the at least one additional device may be positioned downstream of the at least one second feed line in the flow direction of the main stream. The at least one additional device for inducing turbulence and/or backmixing of the mixture may be selected from the group consisting of a passive grid, a static mixer, a bend of the reactor, and combinations thereof, wherein preferably the bend of the reactor induces a change of the flow direction of the mixture relative to the flow direction of the main stream by at least 80 °, preferably at least 135 °. In certain embodiments of the present invention, the reactor comprises two or more sudden expansions, preferably in the second reactor section, more preferably in the first and/or second subsection of the second reactor section. In preferred embodiments, at least 5 % of the atoms of the mixture resulting from the plasmaeous plasma gas leaving the plasma section and the C₁- to C₄-alkane-containing gas of the at least one second feed line have a residence time in the second reactor section which deviates in absolute numbers by at least 5 % from the mean residence time of all atoms of the mixture resulting from the plasmaeous plasma gas leaving the plasma section and the C₁- to C₄-alkane-containing gas of the at least one second feed line in the second reactor section.

The residence time, the mean residence time, and the residence time distribution in the second reactor section, if not specified otherwise, refers to the residence time, the mean residence time, and the residence time distribution in the total second reactor section.

The term "in absolute numbers by at least 5 % deviation from the mean residence time" means that the corresponding atoms have a residence time of up to 95 % or 105 % and more relative to the mean residence time.

Preferably, at least 10 % of the atoms of the mixture resulting from the plasmaeous plasma gas leaving the plasma section and the C₁- to C₄-alkane-containing gas of the at least one second feed line have a residence time in the second reactor section which deviates in absolute numbers by at least 10 % from the mean residence time of all atoms of the mixture resulting from the plasmaeous plasma gas leaving the plasma section and the C₁- to C₄-alkane-containing gas of the at least one second feed line in the second reactor section, more preferred by at least 15 %, even more preferred by at least 20 %, from the mean residence time of all atoms of the mixture resulting from the plasmaeous plasma gas leaving the plasma section and the C₁- to C₄-alkane-containing gas of the at least one second feed line in the second reactor section.

In further embodiments, the flow cross-section transverse to the flow direction of the main stream in the range from the foot points of the electric arc on the inner surface of the hollow channel of the anode down to the most upstream point in the flow direction of the main stream at which the flow cross-section transverse to the flow direction of the main stream is greater by at least a factor of 5, preferably a factor of 10, in comparison with the average flow cross-section of the anode transverse to the flow direction of the main stream in the range of the foot points of the electric arc on the inner surface of the hollow channel of the anode is at any point at least 60 %, preferably at least 80 %, more preferred at least 90 %, relative to the average flow cross-section transverse to the flow direction of the main stream at the foot points of the electric arc on the inner surface of the hollow channel of the anode. This ensures that there is, if at all, only a limited reduction of the flow cross-section between the foot points of the electric arc on the inner surface of the hollow channel of the anode and the point at which the flow cross-section transverse to the flow direction of the main stream is enlarged. This prevents an undesired pressure drop and material stress in this zone of the reactor.

Returning to the facility as a whole, the inventive facility further preferably comprises a device for the production of a second C₁- to C₄ alkane-containing gas from hydrogen and carbon dioxide and/or carbon monoxide. The device for the production of a second C₁- to C₄ alkane-containing gas is preferably connected to the outlet of the device for the production of hydrogen and solid carbon and to a carbon dioxide and/or carbon monoxide source. Additionally, the C₁- to C₄ alkane-containing gas supply line is more preferably branched from an outlet of the device for the production of a second C₁- to C₄ alkane-containing gas. Apart from that, the inventive facility may or may not comprise a hydration device.

The facility according to the present invention preferably further comprises a supply line which is branched from the outlet of the device for the production of hydrogen and solid carbon from a C₁- to C₄-alkane-containing gas by use of electric energy. In this case, it is advantageous, when the supply line supplies a gas comprising hydrogen to an end consumer.

The facility preferably further comprises a monitoring unit and/or a first controller.

The monitoring unit is preferably configured to monitor the relevant specifications of the at least partially decarbonized gas.

The first controller is preferably configured to maximize the absolute amount of hydrogen that is fed into a pipeline of a grid at the feed point. The controller preferably operates based on a flow rate of the C₁- to C₄-alkane-containing gas stream and at least one physical constraint as input parameters. The flow rate of the C₁- to C₄-alkane-containing gas stream is preferably determined at a point upstream of and adjacent to the branching point and at least one further physical parameter of the C₁- to C₄-alkane-containing gas stream measured at the branching point or at a point adjacent to the branching point. The controller preferably regulates the volume stream which is taken from the C₁- to C₄-alkane-containing gas stream in step a) and/or the amount of electrical energy that is supplied to the device for the production of hydrogen and solid carbon from a C₁- to C₄-alkane-containing gas and/or the portion of the gas comprising hydrogen which is either supplied to an end consumer via a supply line or which is fed into a device for the production of a second C₁- to C₄-alkane-containing gas and/or the portion of a second or a third C₁- to C₄-alkane-containing gas that is mixed with the gas comprising hydrogen prior to feeding it to a pipeline of a grid at a feed point in step c).The physical parameters that are particularly relevant in the context of the maximization of the absolute amount of hydrogen have already been enumerated in the above description of the inventive method.

In a preferred embodiment, the facility further comprises a power plant unit.

Additionally, the facility may comprise a storage tank for hydrogen. This storage tank may be used as a buffer in times of overproduction of hydrogen and enables that the device for the production of hydrogen and solid carbon from a C₁- to C₄-alkane-containing gas is run with a constant high capacity.

Another part of the inventive facility could be a compressor and/or an expansion valve. These components may be useful for adjusting the pressure according to the needs of the method. For instance, if the portion which is taken from the C₁- to C₄-alkane-containing gas has a pressure which is different from the pressure as required by the device for the production of hydrogen and solid carbon from a Ci- to C₄-alkane-containing gas, said portion has to be expanded before entering the device for the production of hydrogen and solid carbon from a C₁- to C₄-alkane-containing gas. Before feeding it back into a pipeline of a grid, the gas comprising hydrogen may be compressed again. The energy input may be at least partly compensated by an expansion turbine and/or expansion motor which recovers a portion of the energy that is lost during expansion of a gas.

This allows to make the facility independent of the power from the external power grid and to drive the device for the production of hydrogen and solid carbon with power of a defined CO₂-footprint.

Preferably, the power plant unit is not a coal-fired power plant unit. It is more advantageous, if the power plant unit is a power plant unit which is exclusively operated with fluid input streams. The fluid input streams preferably comprise a portion taken from the C₁- to C₄ alkane-containing gas stream which flows through a pipeline of a transmission grid and/or at least a portion of the gas comprising hydrogen which is produced by the device for the production of hydrogen and solid carbon from a C₁- to C₄-alkane-containing gas by use of electric energy.

More specifically, the power plant unit may be a gas-fired power plant including a combustor, a gas-fired steam turbine and a generator; a gas-fired combined cycle power plant; a gas engine; or a fuel cell.

The inventive facility may further comprise a second controller which is configured to output a command which determines an operation state of the device for the production of hydrogen and solid carbon from a C₁- to C₄ alkane-containing gas by use of electric energy and an operation state of the power plant unit depending on an information with respect to a power in an external power grid. In this case, the facility is preferably only operated, if both controllers provide appropriate outputs. This means that the device for the production of hydrogen and solid carbon from a C₁- to C₄ alkane-containing gas is only powered, if the first controller affirms that there is a possibility to operate within the given physical constraints and if the second controller indicates that the carbon footprint of the output power of the power plant is sufficiently small.

It is further preferred, if the branching point and the feed point, preferably the whole facility, are/is located within a distance of not more than 5 km, preferably not more than 4 km, even more preferably not more than 3 km from a place, where the C₁- to C₄-alkane-containing gas which is transported through the grid is subjected to an intermediate compression by means of at least one compressor or from a natural reservoir of the C₁- to C₄-alkane-containing gas.

Such places already provide branching points which may be co-used by the inventive facility.

In another preferred embodiment, at least the branching point and the feed point, preferably also the other components of the facility, are located within a distance of not more than 5 km from a place where the C₁- to C₄-alkane-containing gas which is transported through the pipeline of the transport grid is subjected to an intermediate compression by means of at least one compressor and wherein the at least one compressor is operated by power from the power plant unit as described above.

The nature of the present invention will become more clearly apparent and better to be understood in view of the accompanying examples and drawings. The examples and drawings should, however, in no way limit the scope of the invention.

The drawings illustrate the following:
Figure 1 is a process flow diagram of one embodiment of the inventive method.
Figure 2 illustrates the arrangement of the device for the production of hydrogen and solid carbon from a C₁- to C₄ alkane-containing gas by use of electric energy with respect to the place where the C₁- to C₄-alkane-containing gas which is transported through the grid is subjected to an intermediate compression by means of at least one compressor.
Figure 3 shows a process flow diagram of another embodiment of the inventive method.

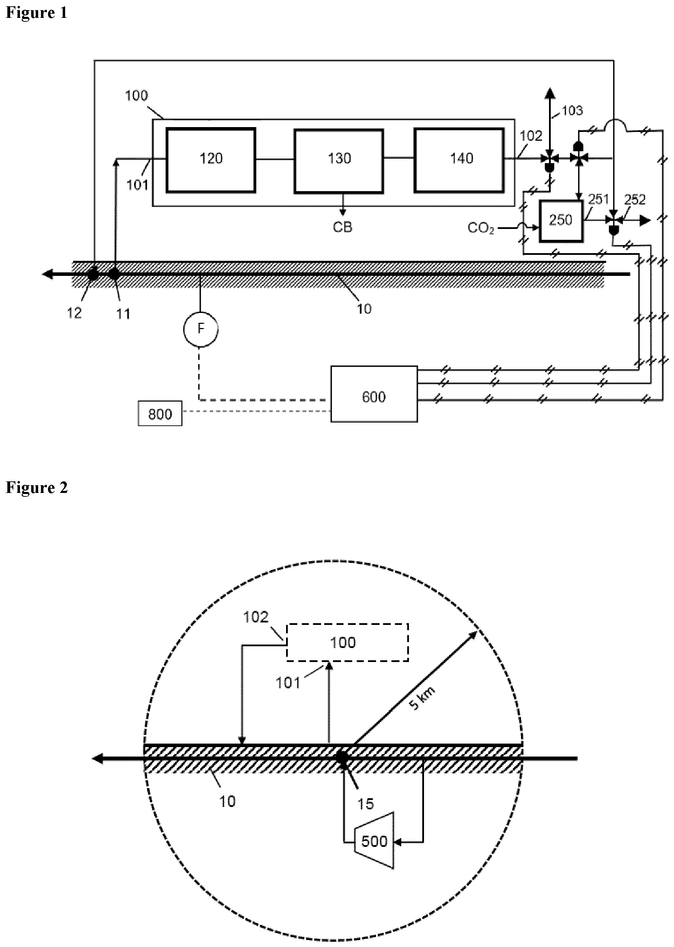

Figure 1 shows a pipeline 10 of a transport grid through which a C₁- to C₄-alkane-containing gas stream is flowing. The C₁- to C₄-alkane-containing gas stream may, for example, be a natural gas stream. At a branching point 11 a portion is taken from the C₁- to C₄-alkane-containing gas stream. This portion may then be denoted the "branched part 11A". The branched part 11A of the C₁- to C₄-alkane-containing gas stream is supplied to the inlet 101 of the device 100 for the production of hydrogen and solid carbon from a C₁-to C₄-alkane-containing gas by use of electric energy. The device 100 for the production of hydrogen and solid carbon from a C₁- to C₄-alkane-containing gas by use of electric energy may be a gas splitting facility.

In the embodiment shown in figure 1, the inlet 101 is directly connected to a feed line of the plasma reactor 120. A conversion of the C₁- to C₄-alkanes to hydrogen and solid carbon takes place in the plasma reactor 120 in a plasma which has been generated artificially in an electric arc. A formation of undesirable by-products is reduced to a minimum by the favorable plasma reactor design, so that a mixture is obtained which mainly comprises hydrogen and solid carbon. The solid carbon is separated from this mixture in a device 130 for separating solid carbon from hydrogen. This results in the production of a gas comprising hydrogen. The gas comprising hydrogen is passed on to a device 140 for enrichment of hydrogen 140. The device 140 may be a PSA-unit, i.e. it may comprise at least two adsorber beds (not shown), and gives a gas comprising hydrogen which has a higher hydrogen purity.

The gas comprising hydrogen leaves the device 100 for the production of hydrogen and solid carbon from a C₁- to C₄-alkane-containing gas by use of electric energy through the outlet 102 and passes several three-way valves. The first three-way valve determines if a portion of the gas comprising hydrogen is withdrawn from the facility via supply line 103. The supply line 103 may, for example, be connected to an end consumer which has a potential application for the gas comprising hydrogen. The second three-way valve determines whether a portion of the gas comprising hydrogen is fed into a device 250 for the production of a second C₁- to C₄-alkane-containing gas. The second C₁- to C₄-alkane-containing gas could, for example, be a methane gas. In order to convert the gas comprising hydrogen to a second C₁- to C₄-alkane-containing gas, the device 250 requires a carbon source. This carbon source preferably consists in a carbon dioxide input. The second C₁- to C₄-alkane-containing gas leaves the device 250 through the outlet 251 and may be transferred to a gas supply line 252 which provides the second C₁- to C₄-alkane-containing gas to an end consumer. Another portion 251A of the second C₁- to C₄-alkane-containing gas may be united with the gas comprising hydrogen and may be fed into a pipeline of a grid at a feed point 12 downstream of the branching point 11. Preferably, the pipeline of the grid is the pipeline 10.

From a control point of view, the three-way valves in figure 1 are control valves. The flow rates which are passed through the control valves may thus be controlled by a control unit 600. As indicated in figure 1, the signal of the controller can be transferred to the control valves via pneumatic control lines. Alternatively, electrical signals may be used in order to regulate the control lines (not shown). In order to generate a signal, the controller receives input values, such as one or more physical constraints 800 and the flow rate of the C₁- to C₄-alkane-containing gas stream measured in the pipeline 10, preferably at a point adjacent to the branching point 11, more preferably upstream to branch point 11.

Figure 2 illustrates the preferred location of the inventive facility. The core part of the facility, the device 100 for the production of hydrogen and solid carbon from a C₁- to C₄-alkane-containing gas by use of electric energy and its inlet 101 and outlet 102, should be installed within a distance of 5 kilometers from the place 15 where the C₁- to C₄-alkane-containing gas which is transported through the pipeline 10 of the transport grid is subjected to an intermediate compression by means of at least one compressor 500. The branching point where the C₁- to C₄-alkane-containing gas is branched in order to supply it to the compressor 500 may also be used by the inventive facility and method (not shown) in order to save appropriate fitting elements.

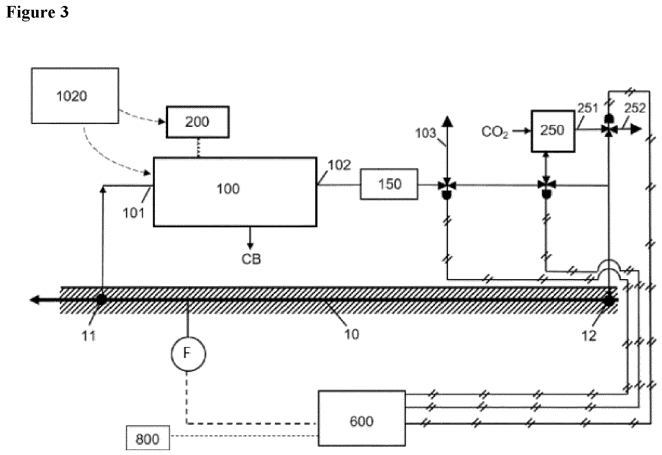

Figure 3 shows another embodiment of the invention. In contrast to the embodiment shown in figure 1, the feed point 12 is upstream of the branching point 11. Moreover, the device 100 for the production of hydrogen and solid carbon from a C₁- to C₄-alkane-containing gas by use of electric energy, in particular the plasma reactor, is supplied with electric energy by a power plant unit 200. The operation states of the device 100 and the power plant unit are controlled by means of a second controller 1020. Additionally, the embodiment shown in figure 3 comprises a hydration device 150 which serves to hydrate unsaturated hydrocarbons which occur as unintentional by-products from the gas splitting reaction in device 100 for the production of hydrogen and solid carbon from a C₁- to C₄-alkane-containing gas by use of electric energy that are comprised by the gas comprising hydrogen.

## Claims

1. Method for decarbonizing a C₁- to C₄-alkane-containing gas stream at least partially and transporting it to a desired destination, wherein the method comprises at least the following steps:
a) taking a portion from a C₁- to C₄-alkane-containing gas stream which flows through a pipeline (10) of a transmission grid at a branching point (11);
b) decarbonizing said portion by
b1) converting said portion into a mixture comprising hydrogen and solid carbon by use of electric energy and
b2) separating the solid carbon in order to obtain a gas comprising hydrogen;
c) feeding at least a portion of the gas comprising hydrogen into a pipeline of a grid at a feed point (12) upstream or downstream of the branching point (11) thereby obtaining an at least partially decarbonized gas stream; and
d) transporting the at least partially decarbonized gas stream to a desired destination.

2. Method according to claim 1, further comprising a step of maximizing an absolute amount of hydrogen contained in the gas comprising hydrogen,
wherein said step is preferably controlled based on a flow rate of the C₁- to C₄-alkane-containing gas stream and at least one physical constraint (800),
wherein said step is more preferably controlled based on a flow rate of the C₁-to C₄-alkane-containing gas stream at a point upstream of and adjacent to the branching point (11) and at least one further physical parameter of the C₁- to C₄-alkane-containing gas stream measured at the branching point (11) or at a point adjacent to the branching point (11).

3. Method according to at least one of the preceding claims, further comprising a step of
supplying a portion of the gas comprising hydrogen to an end consumer via a supply line (103) and/or
synthesizing a second C₁- to C₄-alkane-containing gas from a portion of the gas comprising hydrogen by reacting said portion with carbon dioxide and/or carbon monoxide in a device (250) for the production of a second C₁- to C₄-alkane-containing gas,
wherein the carbon dioxide and/or monoxide that is reacted with hydrogen in the device (250) for the production of a second C₁- to C₄-alkane-containing gas is preferably obtained by means of separation from an off-gas of an industrial process, for example from an off-gas generated by
- operation of a power plant unit (200),
- production of the C₁- to C₄-alkane-containing gas, and/or
- operation of a biogas plant.

4. Method according to at least one of the preceding claims, wherein a plasma reactor (120) is used to convert the portion taken from the C₁- to C₄-alkane-containing gas stream into a mixture comprising hydrogen and solid carbon.

5. Method according to at least one of the preceding claims, wherein the electric energy that is used for converting the portion of the C₁- to C₄-alkane-containing gas stream which has been taken from the C₁- to C₄-alkane-containing gas stream in step a) into a mixture comprising hydrogen and solid carbon, is produced by a power plant unit (200), preferably a power plant unit (200) having a carbon footprint from 0 to 600 g_{CO2}/kWh_{used}, preferably from 0 to 500 g_{CO2}/kWh_{used}, more preferably from 0 to 400 g_{CO2}/kWh_{used}, most preferably from 0 to 350 g_{CO2}/kWh_{used}.

6. Method according to at least one of the preceding claims, wherein the portion of the gas stream comprising hydrogen which is fed into a pipeline of a grid in step c) contains unsaturated hydrocarbons in a concentration of less than 2 vol.-%, preferably less than 1 vol.-%, even more preferably less than 0.1 vol.-%, wherein said concentration is preferably achieved by hydrating at least a portion of unsaturated hydrocarbons that are comprised by the gas comprising hydrogen prior to step c) in a hydration device (150).

7. Method according to at least one of the preceding claims, wherein the solid carbon is sequestered and/or further processed after it has been separated from the hydrogen in the mixture comprising hydrogen and solid carbon in step b2),
preferably further processed by supplying at least a fraction of the solid carbon to a chemical or physical process.

8. Method according to at least one of the preceding claims,
wherein the pipeline of the grid, into which at least a portion of the gas comprising hydrogen is fed, is the pipeline (10) of the transmission grid or another pipeline of the transmission grid or
wherein the pipeline of the grid into which at least a portion of the gas comprising hydrogen is fed belongs to a distribution grid.

9. Facility for at least partially decarbonizing a C₁- to C₄-alkane-containing gas stream being transported through a pipeline (10) of a transmission grid, comprising
a device (100) for the production of hydrogen and solid carbon from a C₁- to C₄-alkane-containing gas by use of electric energy,
wherein the device comprises at least one device (130) for separating solid carbon from hydrogen,
wherein the device (100) further comprises an inlet (101) and an outlet (102), and wherein the inlet (101) is connected to the pipeline (10) of the transmission grid at a branching point (11) and the outlet (102) is connected to a pipeline of a grid at a feed point (12) downstream or upstream of the branching point (11).

10. Facility according to claim 9, wherein the device (100) for the production of hydrogen and solid carbon from a C₁- to C₄-alkane-containing gas by use of electric energy further comprises a plasma reactor (120) and/or a device for enrichment of hydrogen (140).

11. Facility according to claim 10, wherein the plasma reactor (120) comprises
i) a plasma section comprising
• an anode and a cathode for generating an electric arc, the arc extending within the plasma section, and
• at least one first feed line for introducing a C₁- to C₄-alkane-containing plasma gas into the plasma section of the reactor,
• wherein the anode has a hollow channel along the flow direction of the main stream of the plasma gas which has an inner surface, an outlet in the flow direction of the main stream of the plasma gas which forms the open end of the anode in the flow direction of the main stream, and at least one inlet for receiving the C₁- to C₄-alkane-containing plasma gas introduced into the plasma section of the reactor via the at least one first feed line wherein the inlet forms the open end of the anode facing into the direction opposite to the flow direction of the main stream, and wherein the anode is configured such that the plasma gas flows through the hollow channel via the open end of the anode facing into the direction opposite to the flow direction of the main stream and the open end of the anode in the flow direction of the main stream, wherein the plasma gas contacts the inner surface of the hollow channel of the anode on its passage through the anode, and
• wherein said anode and said cathode are arranged so that the arc generated by them is formed in said plasma section to form a plasmaeous plasma gas in said plasma section from the C₁- to C₄-alkane-containing plasma gas introduced into said plasma section through said at least one first feed line, and wherein the foot points of the electric arc contacting the anode are located on the inner surface of the hollow channel of the anode, and
ii) a second reactor section directly downstream of the plasma section of the reactor in the flow direction of the main stream, the second reactor section comprising
• a first subsection and a second subsection, wherein the second subsection is directly downstream of the first subsection in the flow direction of the main stream, and
• outlet means for withdrawing components from the reactor, wherein the outlet means are located at the end of the second reactor section in the flow direction of the main stream, wherein
• the first subsection comprises at least one second feed line for introducing a C₁- to C₄-alkane-containing gas into the second reactor section, wherein
• the at least one second feed line is arranged such that the C₁- to C₄-alkane-containing gas which is introduced into the reactor via the at least one second feed line is introduced into the plasmaeous gas at a position downstream of the foot points of the electric arc in the flow direction of the main stream, so that in the first subsection of the second reactor section downstream of the at least one second feed line a mixture is formed from the plasmaeous plasma gas leaving the plasma section and the C₁- to C₄-alkane-containing gas of the at least one second feed line, and
• wherein the position of the at least one second feed line along the flow direction of the main stream defines the beginning of the second reactor section and of its first subsection, and
• wherein the volume of the plasma section which begins at the most upstream position at which the inner surface of the hollow channel of the anode is facing the electric arc and reaches down to the end of the plasma section of the reactor has a volume in the range of 0.0001 m³ to 0.4 m³, preferably in the range of 0.001 to 0.2 m³, and defines a reference volume, and
• wherein the volume of the first subsection of the second reactor section is in the range of 10 to 200 times the reference volume, preferably in the range of 20 to 100 times the reference volume, and
• wherein the volume of the total second reactor section is in the range of 20 to 2,000 times the reference volume, preferably in the range of 40 to 1,000 times the reference volume, and
• wherein the reactor comprises in the first subsection of the second reactor section and/or in the plasma section in the range downstream in the flow direction of the main stream of the foot points of the electric arc on the inner surface of the hollow channel of the anode down to the end of the plasma section at least at one point a flow cross-section transverse to the flow direction of the main stream which is greater by at least a factor of 5, preferably by at least a factor of 10, in comparison with the average flow cross-section of the anode transverse to the flow direction of the main stream in the range of the foot points of the electric arc on the inner surface of the hollow channel of the anode.

12. Facility according to at least one of claims 9 to 11, wherein the facility further comprises a device (250) for the production of a second C₁- to C₄-alkane-containing gas from hydrogen and carbon dioxide and/or carbon monoxide as well as an optional hydration device,
wherein the device (250) for the production of a second C₁- to C₄-alkane-containing gas is preferably connected to the outlet (102) of the device (100) for the production of hydrogen and solid carbon and to a carbon dioxide and/or a carbon monoxide source, and
wherein a C₁- to C₄-alkane-containing gas supply line (252) is more preferably branched from an outlet (251) of the device (250) for the production of a second C₁- to C₄-alkane-containing gas.

13. Facility according to at least one of claims 9 to 12, wherein a supply line (103) is branched from the outlet (102), wherein the supply line (103) preferably supplies a gas comprising hydrogen to an end consumer.

14. Facility according to at least one of claims 9 to 13, wherein the facility further comprises a first controller (600) which is configured to maximize the absolute amount of hydrogen that is fed into a pipeline of a grid at the feed point (12),
wherein the controller preferably operates based on a flow rate of the C₁- to C₄-alkane-containing gas stream and at least one physical constraint (800) as input parameters,
more preferably based on a flow rate of the C₁- to C₄-alkane-containing gas stream at a point upstream of and adjacent to the branching point (11) and at least one further physical parameter of the C₁- to C₄-alkane-containing gas stream measured at the branching point (11) or at a point adjacent to the branching point (11).

15. Facility according to at least one of claims 9 to 14, wherein the facility further comprises a power plant unit (200).
